## Europäisches Patentamt

(19) **European Patent Office**

**Office européen des brevets**

(11) Veröffentlichungsnummer: **0 196 730**

**B1**

(12) # EUROPÄISCHE PATENTSCHRIFT

(45) Veröffentlichungstag der Patentschrift:
02.08.89

(51) Int. Cl.⁴: **C 03 B 29/00, B 23 K 26/00**

(21) Anmeldenummer: **86200556.8**

(22) Anmeldetag: **02.04.86**

(54) **Verfahren und Anordnung zur Ausheilung von mechanischen und/oder chemischen Schädigungen der Oberfläche von Mehrwegflaschen.**

(30) Priorität: **03.04.85 NL 8500985**

(43) Veröffentlichungstag der Anmeldung:
**06.10.86 Patentblatt 86/41**

(45) Bekanntmachung des Hinweises auf die Patenterteilung:
**02.08.89 Patentblatt 89/31**

(84) Benannte Vertragsstaaten:
**BE DE FR GB IT NL**

(56) Entgegenhaltungen:
**EP-A-0 067 793**
**WO-A-82/00635**
**US-A-4 445 922**

(73) Patentinhaber: **Heineken Technisch Beheer B.V., 2e Weteringplantsoen 21, NL- 1017 ZD Amsterdam (NL)**

(72) Erfinder: **Baumert, Reinhard, Postfach 900160, D-6000 Frankfurt (DE)**
Erfinder: **Gaar, Hans, Postfach 900160, D-6000 Frankfurt (DE)**
Erfinder: **Hoffmann, Ulrich, Kronthaler weg 10, D-6236 Eschborn 2 (DE)**
Erfinder: **Roth, Ulrich, Postfach 900160, D-6000 Frankfurt (DE)**
Erfinder: **Schwämmlein, Wolfgang, Postfach 900160, D-6000 Frankfurt (DE)**
Erfinder: **Heineken, Alfred Henry, p/A 2e Weteringplantsoen 21, NL- 1017 ZD Amsterdam (NL)**

(74) Vertreter: **Smulders, Theodorus A.H.J., Ir., Vereenigde Octrooibureaux Nieuwe Parklaan 107, NL- 2587 BP 's- Gravenhage (NL)**

## Beschreibung

Die Erfindung bezieht sich auf ein Verfahren zum Ausheilung von mechanischen und/oder chemischen Schädigungen der Oberfläche von gläsernen Mehrwegflaschen, wobei eine auszuheilende Flasche auf eine Temperatur im Bereich des Transformationspunktes des Glases der Flasche gebracht wird, die Oberfläche der Flasche mit Laserstrahlen thermisch behandelt wird, und die Ausheilung dadurch erfolgt, dass die Flaschenoberfläche strichförmig mit den Laserstrahlen abgetastet wird, während die Flasche um ihre Längsachse rotiert.

Die Erfindung bezieht sich auch auf eine Anordnung zur Ausheilung von mechanischen und/oder chemischen Schädigungen der Oberfläche von gläsernen Mehrwegflaschen, umfassend: eine Laserquelle, optische Organe zum Richten des von der Laserquelle erzeugten Laserbundels auf die Oberfläche einer zu behandelnden Flasche, Mittel, die Flasche auf eine Temperatur im Bereich des Transformationspunktes des Glases zu bringen, und Mittel, die Flasche um ihre Längsachse rotieren zu lassen.

Ein solches Verfahren und eine solche Anordnung sind bekannt aus WO-A-82/00635, wobei die Abtastung der Flasche in Umfangsrichtung verläuft.

Mehrweg-Bierflaschen zeigen nach längerem Gebrauch Verschleisserscheinungen, hauptsächlich im oberen und unteren Randbereich des zylinderförmigen Flaschenteils. Hervorgerufen werden diese Verschliesserscheinungen durch Reibung, Schlag und Stoss bei Transport und Umschlag, insbesondere aber auch durch die Manipulation in den Spül-, Abfüll- und Verpackungsanlagen in der Brauerei selbst. Haben die Verschleisserscheinungen ein gewisses Ausmass erreicht, so sind die Flaschen aus ästhetischen Gründen nicht mehr akzeptabel und werden aussortiert.

In der Glasindustrie wird zur Glättung der Glasoberfläche und zur Ausheilung kleinster, durch die Formgebung hervorgerufener Defekte, insbesondere bei Ziergläsern die Säurepolitur oder die sogenannte "Feuerpolitur" angewandt. Es ist auch bekannt, Glasoberflächen mechanisch zu polieren.

Die Säurepolitur ist jedoch wegen der damit verbundenen Umweltbelastung bzw. der kostspieligen Beseitigung der Säure-Rückstände, besonders von Nachteil. Die mechanische Politur ist im Vergleich zur Flammenpolitur mit einem sehr hohen Arbeitsaufwand verbunden.

Schliesslich ist auch bekannt, dass an Werkstücken aus Glas abtragende oder verformende Bearbeitungsvorgänge (Schweissen, Trennen, Bohren, Gravieren) durch Laserbestrahlung vorgenommen werden. Beim Gravieren, z. B. wirkt die Laserstrahlung auf Werkstücke aus Glas, die sich auf Umgebungstemperatur befinden. Bei tieferwirkenden Bestrahlungen von Glas hat sich eine Vorwärmung der Werkstücke vor dem Bestrahlen als erforderlich erwiesen, um ein Zerspringen des Werkstücks wegen hoher plötzlicher Erwärmung beim Bestrahlen zu vermeiden.

Insbesondere ist aus DE-C1-3 207 274 ein Verfahren zum Polieren vorgeschliffener Oberflächen an Werkstücken aus Glas mit Laserstrahlung bekannt geworden, bei dem die Werkstücke für die Bestrahlung bis nahe dem Transformationspunkt des Glases erwärmt werden.

Die Aufgabe der Erfindung ist die Schaffung eines Verfahrens und einer Anordnung der obengenannten Art, wodurch es möglich wird, sowohl leicht wie schwer beschädigte Mehrwegflaschen in einer schnellen, wirtschaftlichen, zweckmässigen und umweltfreundlichen Weise auszuheilen.

Die Erfindung schafft dazu ein Verfahren der eingangs genannten Gattung wobei die Flaschenoberfläche ggf. teilweise längs im wesentlichen parallel zur Längsachse der Flasche an der Flaschenoberfläche entlang verlaufender Striche behandelt wird.

Die Erfindung schafft auch eine Anordnung der eingangs genannten Gattung wobei die optischen Organe einen oszillierenden Schwingspiegel umfassen, der auf der Flaschenoberfläche, parallel zur Längsachse der Flasche, eine strichförmige Aufschmelzfläche erzeugt. Weitere erfindungsgemäße Anordnungen gehen aus den Ansprüchen 10, 13, 15 und 16 hervor.

Anders als bei der Flammenpolitur oder bei dem eben genannten Laserpolierverfahren ermöglicht das erfindungsgemässe Verfahren nicht nur eine Politur der Glasoberfläche, sondern auch ein Glattschmelzen grossflächiger, relativ tief zerklüfteter Schadstellen mit einer Rauhtiefe bis zu einigen 10 Mikron.

Die Prozessführung muss dabei so gewählt werden, dass gerade ein Glattschmelzen der Schadstellen erfolgt, eine Deformation der Flasche aber unterbleibt.

Das heisst, die Wärmequelle muss wesentlich mehr Energie auf die Oberfläche aufbringen, als durch Wärmeleitung in der gleichen Zeit ins Glasinnere abgeführt werden kann. Um eine Deformation zu verhindern, kann die thermische Behandlung auch in mehrere Zyklen aufgeteilt werden.

Der bei diesem thermischen Verfahren entstehende grosse Temperaturgradient zwischen Glasoberfläche und Glasinnerem kann vom Werkstoff Glas nur dann ohne Schaden überstanden werden, wenn das Glas auf ein Temperaturniveau nahe dem Erweichungsbereich (Transformationstemperatur 500 - 600°C) gebracht wird, so dass die durch plötzliche Temperaturbeaufschlagung induzierten Spannungen durch plastische Ausgleichsbewegungen schnell ausgeglichen und abgebaut werden können.

Beim Aufschmelzvorgang verdampfen die leichtflüchtigen Glaskomponenten (Alkali-Erdalkalioxide). Durch den dadurch geringeren Flussmittelgehalt in den oberflächennahen Bereichen wird der Ausdehnungskoeffizient geringer, die Glasoberfläche wird dadurch unter Druckspannung gesetzt, die Festigkeit der Flasche steigt. Auch die Härte und die chemische Beständigkeit nehmen dadurch zu. Das heisst, durch die thermische Behandlung der Flächen werden die Gebrauchseigenschaften verbessert.

Daraus ergibt sich aber auch, dass bei einer Wiederholung der thermischen "Flaschenreparatur" höhere Wärmeleistungen angewandt werden müssen. Es besteht jedoch auch die Möglichkeit, vor der eigentlichen thermischen Behandlung ein der Zusammensetzung des Flaschenglases ähnliches Glas auf die Schadstellen der Flasche aufzubringen und bei der thermischen Behandlung aufzuschmelzen.

Es hat sich als vorteilhaft erwiesen, während oder nach der thermischen Behandlung der Flaschenoberfläche eine Titandioxid- oder Zinnoxidschicht aufzubringen.

Als Laserstrahlquelle zur thermischen Behandlung von Glasoberflächen eignet sich ausschliesslich ein $CO_2$-Hochleistungslaser, da die emittierte Wellenlänge von 10,6 Mikron in weniger als 1 Mikron Tiefe von Glas absorbiert wird. Momentan eignet sich dazu nur ein $CO_2$-Laser. Darüber hinaus ist der $CO_2$-Laser der einzige Lasertyp, mit dem optische Leistungen im Kilowatt-Bereich erzeugt werden können. Die Möglichkeit Laserstrahlung zu fokussieren, eröffnet die Erzeugung von Leistungsdichten im Bereich von Megawatt/cm$^2$ und bei Glas insbesondere die Erzeugung dieser hohen Leistungsdichten in sehr kurzer Zeit direkt in der Glasoberfläche.

Das Glattschmelzen tieferer Schadstellen erfolgt durch Wärmeleitung. Da die gesamte Energie in eine dünne Oberflächenschicht eingebracht wird, ist das Risiko der Deformation der Flasche durch thermisches Erweichen der gesamten Flaschenwandung äusserst gering.

Zur Verringerung der natürlichen Reflexion des Glases besteht die Möglichkeit vor der Laserbehandlung die Flaschenoberfläche mechanisch, z. B. durch Sandstrahlen, aufzurauhen. Diese Vorbehandlung erlaubt, die Laserbestrahlung mit geringeren Laserleistungen durchzuführen.

Orientierende Untersuchungen der Oberflächenglättung durch kurzzeitiges Aufheizen mit Laserstrahlung zeigten deutlich, dass hiermit ein völliges Glätten verschlissener Flaschenoberflächen ohne Deformation der Flasche möglich ist. Die Flaschentemperatur lag knapp über der Transformationstemperatur des Glases. Die Behandlungsdauer lag im Bereich von wenigen Sekunden.

In weiteren Versuchsreihen wurde das Aufschmelzen der Aussenoberfläche mit einem in vertikaler Richtung strichförmig fokussierten Laserstrahl bei um ihre Längsachse rotierender Flasche durchgeführt. Es konnte gezeigt werden, dass durch vertikales Verschieben des Laserstrahls und der verwendeten Zylinderlinse (Fokuslänge: 125 mm, Strichlänge des Fokus: 20 mm) und Rotieren der Flasche die Glättung der gesamten verschlissenen Oberfläche bis zur vollen Höhe von ca. 110 mm gelingt. Die Energieeinbringung in die Flaschenoberfläche kann mit verschiedenen Strahlführungs- und Abbildungssystemen erfolgen.

Die Erfindung verschafft auch eine Anordnung, die sich zur Durchführung des obenbeschriebenen Verfahrens eignet. Eine Anzahl Ausführungsbeispiele einer derartigen Anordnung wird im Nachstehenden an Hand der Zeichnung erläutert.

Es zeigen:

Fig. 1a eine schematische Ansicht einer ersten Anordnung gemäss der Erfindung;

Fig. 1b eine Modifikation einer Anordnung gemäss Fig. 1a;

Fig. 1c eine andere Modifikation der Anordnung gemäss Fig. 1a;

Fig. 2a eine schematische Ansicht einer zweiten Anordnung gemäss der Erfindung;

Fig. 2b eine Modifikation der Anordnung gemäss Fig. 2a;

Fig. 2c eine andere Modifikation der Anordnung gemäss Fig. 2a;

Fig. 3a eine schematische Ansicht einer dritten Anordnung gemäss der Erfindung;

Fig. 3b eine Draufsicht der Linse 14 aus der Anordnung gemäss Fig. 3a;

Fig. 4a eine schematische Ansicht einer vierten Anordnung gemäss der Erfindung; und

Fig. 4b eine Draufsicht der Linsen 18 und 19 aus der Anordnung gemäss Fig. 4a.

In den Figuren sind gleiche Teile mit gleichen Bezugsziffern angegeben.

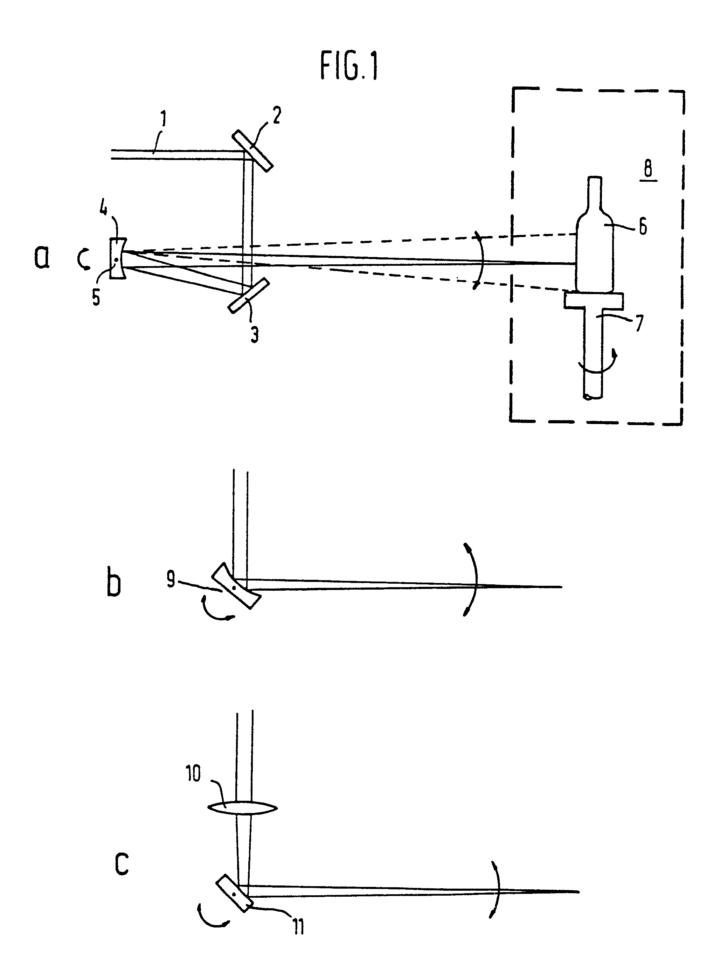

Fig. 1a zeigt schematisch den Aufbau einer ersten Anordnung gemäss der Erfindung.

Ein horizontal verlaufender $CO_2$-Laserstrahl 1 aus einer nicht gezeigten Laserquelle wird über einen hochreflektierenden ebenen Metallspiegel 2 senkrecht nach unten abgelenkt. Ein zweiter Planspiegel 3 lenkt den Laserstrahl zu einem fokussierenden Schwingspiegel 4. Der Spiegel 4 schwingt um die horizontal angeordnete Achse 5. Der Schwingspiegel ist in der horizontalen Ebene soweit versetzt, dass die vom Schwingspiegel reflektierten Laserstrahlen am Spiegel 3 seitlich vorbeigeführt werden kann. Die Anordnung der Spiegel 3 und 4 bewirkt einen kleinen Ein- bzw. Ausfallwinkel und gewährleistet damit eine bestmögliche Fokussierung des Laserstrahles durch den sphärisch konkaven Schwingspiegel 4.

Der fokussierte Laserstrahl trifft im Bereich der Brennebene des Schwingspiegels 4 auf die Flaschenoberfläche der Glasflasche 6. Die Glasflasche steht auf einem rotierenden Drehteller 7. Drehteller und Glasflasche befinden sich in einem elektrisch beheizten Ofen 8.

Der Schwingspiegel 4 ist Teil eines als Resonanzschwinger ausgelegten Schwingspiegeloszillators. Der Schwingspiegel bewegt sich sinusförmig mit einer festen Frequenz von z. B. 180 Hz, bei einem vertikalen Hub von ca. 110 mm auf dem zylinderförmigen Teil der Flasche. Damit ergibt sich eine mittlere vertikale Verfahrgeschwindigkeit von 40.000 mm/s. Der Umfang der Glasflasche beträgt 198 mm, so dassbei einer 1/5 Umdrehung der Flasche pro Sekunde eine horizontale Verfahrgeschwindigkeit von 40 mm/s resultiert.

Der minimale Brennfleck des Laserstrahles für den Schwingspiegel 4 mit einer Brennweite von 1000 mm liegt bei 0,7 mm. Unter Berücksichtigung der vertikalen und horizontalen Verfahrgeschwindigkeit ergibt sich für die Laserbestrahlung, dass ein 0,7 mm breiter vertikaler Oberflächenstreifen der Glasflasche ca. 12 mal punktförmig von dem Laserstrahl überstrichen wird. Der vertikal bewegte Laserstrahl erzeugt wegen der hohen Wärmekapazität des Glases somit eine strichförmige Aufschmelzfläche von 0,7 mm Breite und 110 mm Höhe, die sich bei rotierender Flasche den Flaschenumfang entlang bewegt. Die Oberfläche der Flasche wird damit bei nur einer Umdrehung, gemäss Anordnung 1a völlig geglättet.

Wie Fig. 1b zeigt, können die Spiegel 3 und 4 zu einem asphärisch geformten Schwingspiegel 9 zusammengefasst werden. Die durch den grossen Einfall- bzw. Ausfallwinkel auftretenden geometrischen Abbildungsfehler eines normalen sphärischen Hohlspiegels werden hier durch eine asphärische Form des Spiegels korrigiert.

Wie Fig. 1c zeigt, gibt die Kombination einer fokussierenden Linse 10 und eines schwingenden Planspiegels 11 eine weitere Möglichkeit einer Strichaufschmelzung. Der Laserstrahl wird mittels einer bikonvexen Linse 10 (i. A. ZnSe-Linse) auf die Flaschenoberfläche fokussiert, wobei der fokussierte Strahl innerhalb der Brennweite der Linse durch einen schwingenden Planspiegel 11 um 90° abgelenkt wird.

Bei der Ausführungsform gemäss den Figuren 1a - c bewegt sich der Laserstrahl abhängig von dem Steuersignal für den Schwingspiegel z. B. sinusförmig oder dreieckförmig über die Flaschenoberfläche.

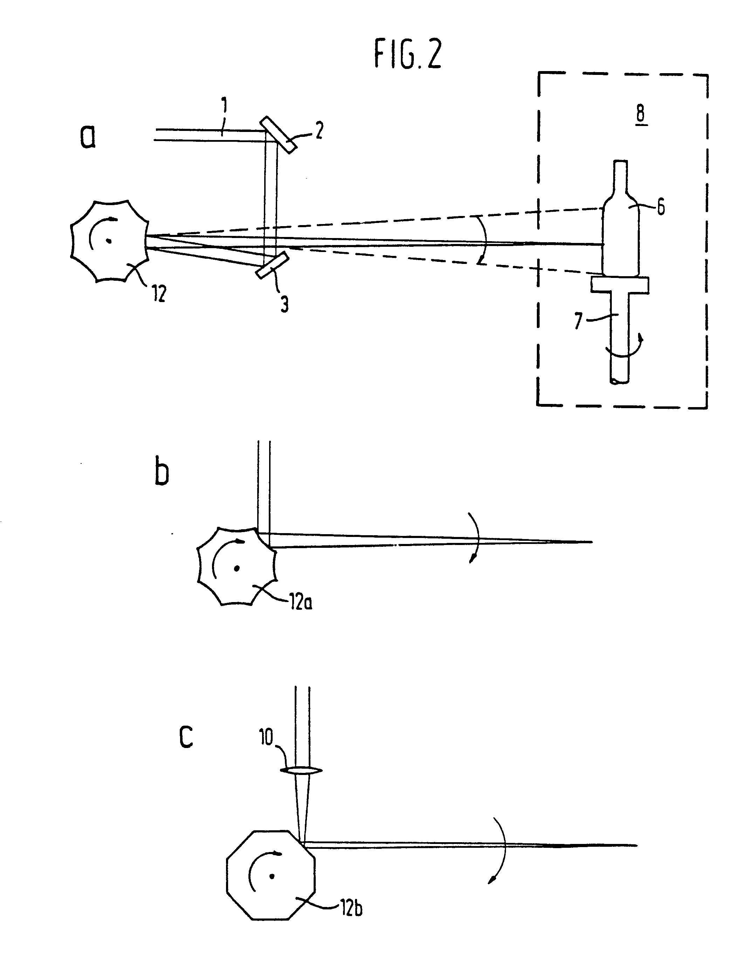

Fig. 2 zeigt ein anderes Ausführungsbeispiel, wobei der oszillierende Spiegel 4 gemäss Fig. 1a durch einen rotierenden Polygonspiegel 12 ersetzt ist, der den Laserstrahl periodisch in einer einzigen Richtung ablenkt. Die einzelnen Spiegelsegmente des Polygonspiegels können in der Anordnung nach Fig. 2a als sphärische Hohlspiegel 12a ausgebildet werden.

Bei der Anordnung gemäss Fig. 2b sind die Spiegelsegmente 12a asphärisch ausgebildet mit dem Vorteil, dass die spiegelnden Oberflächen 2 und 3 entfallen können. Bei der Anordnung gemäss Fig. 2c sind die Spiegelsegmente 12b planar ausgebildet und ist eine bikonvexe Linse für das Fokussieren der Laserstrahlung vorgesehen.

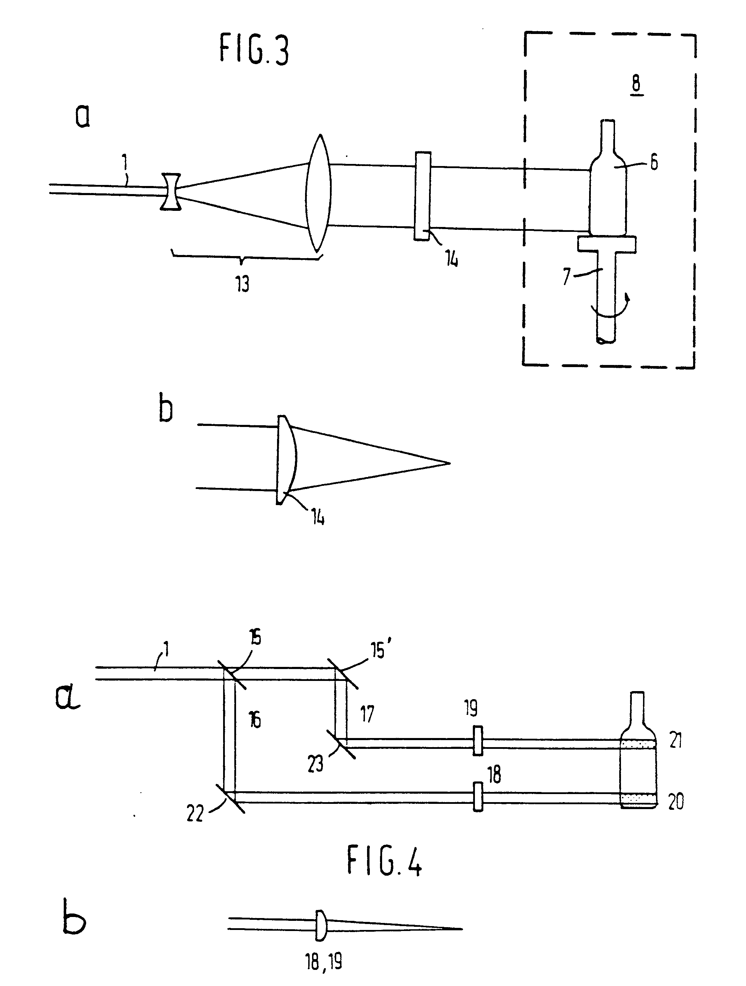

Fig. 3 zeigt eine Anordnung, bei der das Bündel 1 mit Hilfe einer Bündelaufweitoptik 13 auf einen Strahldurchmesser von 110 mm aufgeweitet wird und mit einer entsprechend grossen Zylinderlinse 14 als Strich auf die Flaschenoberfläche fokussiert wird. Dabei wird die verschlissene Oberfläche bei nur einer Flaschenumdrehung geglättet.

Durch eine geeignete Wahl der Optik kann selbstverständlich die Höhe der zu behandelnden Flaschenoberfläche auf im Prinzip jeden gewünschten Wert eingestellt werden.

Bei der Anordnung gemäss Fig. 4 wird das Laserbündel 1 mittels eines Bündelteilers 15, 15' in zwei Teilbündel 16, 17 zerlegt. Jeder Teilbündel wird mit Hilfe von Spiegeln 22 bzw. 23 und Zylinderlinsen 18, 19 auf die Flaschenoberfläche derart fokussiert, dass die Hauptverschleisszonen 20, 21 am oberen und unteren Rand des zylinderförmigen Teils der Flaschen bestrahlt werden. Die Behandlung der vollen Höhe der zu glättenden Fläche kann prinzipiell durch mehrere, dicht nebeneinander liegende, vertikale Teilbündel erfolgen.

Bei den Anordnungen gemäss den Figuren 1 - 3 werden der Reihe nach nebeneinander liegende vertikale strichförmige Bereiche mittels eines zu einem Brennfleck fokussierten Laserbündels, das kontinuierlich vertikal abgelenkt wird, behandelt. Es ist jedoch auch möglich, der Reihe nach nebeneinander liegende horizontale Bereiche zu behandeln. Dazu kann z. B. das Laserbündel mit Hilfe einer ZnSe-Zylinderlinse (typ. Durchmesser 20 mm, Brennweite bis 500 mm) gebündelt, mittels eines Kippspiegels von 90° abgelenkt und als Strich auf die Flaschenoberfläche fokussiert werden. Nach jeder Umdrehung der Flasche wird der Fokus durch den Kippspiegel um die Strichhöhe verschoben, bis die gesamte zu glättende Fläche in voller Höhe von 110 mm behandelt ist. Alternativ könnte der Laserstrahl in vertikaler Richtung kontinuierlich verschoben werden. Die Steighöhe der Bestrahlungsspirale pro Umdrehung wäre dabei maximal eine Strichhöhe.

Auch könnte eine sphärische Linse verwendet werden, wobei die Steighöhe der Bestrahlungsspirale höchstens gleich dem Brennfleckdurchmesser gewählt werden darf.

Die geometrische Anordnung könnte für diese letzte Ausführungsform der Anordnung gemäss Fig. 1c entsprechen, wobei der Schwingspiegel 11 durch einen Kippspiegel ersetzt worden ist.

Bei den Optiken, bei denen das Laserbündel punktförmig fokussiert wird, ist es im allgemeinen erwünscht, die Intensitätsverteilung über den Bündelquerschnitt des Lasers durch einen variablen Strahlintegrator zu homogenisieren bzw. an den Verschleiss anzupassen. Damit kann eine optimale Intensitätsverteilung des Laserstrahles auf der Flaschenoberfläche erreicht werden.

Die Bestrahlungsoptik kann in an sich bekannter Weise in eine mechanische Struktur aufgenommen werden, die eine rechnergesteuerte Strahlbewegung ermöglicht. Die Optiken werden dabei durch Schutzgaseinrichtungen (Pressluft) vor Schmutz und Abbrand geschützt.

Die Anzahl gleichzeitig zu behandelnder Flaschen in einer Anlage wird mittels Bündelteilung durch Bündelteiler bestimmt. Dafür notwendige Aussagen über Intensitätsverluste, über Teilungsverhältnisse und über die Geometrie der Teilbündelführung können in Experimenten zur Oberflächenglättung mit Teilbündeln erhalten werden.

### Patentansprüche

1. Verfahren zur Ausheilung von mechanischen und/oder chemischen Schädigungen der Oberfläche von gläsernen Mehrwegflaschen, wobei eine auszuheilende Flasche (6) auf eine Temperatur im Bereich des Transformationspunktes des Glases der Flasche (6) gebracht wird, die Oberfläche der Flasche (6) mit Laserstrahlen (1) thermisch behandelt wird, die Ausheilung dadurch erfolgt, dass die Flaschenoberfläche strichförmig mit den Laserstrahlen (1) abgetastet wird, während die Flasche (6) um ihre Längsachse rotiert; dadurch gekennzeichnet, dass die Flaschenoberfläche ggf. teilweise längs im wesentlichen parallel zur Längsachse der Flasche an der Flaschenoberfläche entlang verlaufender Striche behandelt wird.

2. Verfahren nach Anspruch 1, dadurch gekennzeichnet, dass die Flasche (6) auf eine Temperatur von 500 - 600°C gebracht wird und dass die Laserstrahlen (1) mit einem $CO_2$-Laser erzeugt werden.

3. Verfahren nach Anspruch 1 oder 2, dadurch gekennzeichnet, dass vor der thermischen Behandlung ein dem Flaschenglas ähnliches Glas auf eine Schadstelle der Flaschenoberfläche aufgebracht und bei der thermischen Behandlung aufgeschmolzen wird.

4. Verfahren nach wenigstens einem der Ansprüche 1 bis 3, dadurch gekennzeichnet, dass während oder nach der thermischen Behandlung eine Titandioxid- oder Zinnoxidschicht auf die Flaschenoberfläche aufgetragen wird.

5. Verfahren nach wenigstens einem der Ansprüche 1 bis 4, dadurch gekennzeichnet, dass vor der Bestrahlung mit Laserstrahlen (1) die Glasoberfläche mechanisch aufgerauht wird.

6. Anordnung zur Ausheilung von mechanischen und/oder chemischen Schädigungen der Oberfläche von gläsernen Mehrwegflaschen (6), umfassend: eine Laserquelle, optische Organe zum Richten des von der Laserquelle erzeugten Laserbündels (1) auf die Oberfläche einer zu behandelnden Flasche (6), Mittel (8) um die Flasche (6) auf eine Temperatur im Bereich des Transformationspunktes des Glases zu bringen, und Mittel (7) um die Flasche (6) um ihre Längsachse rotieren zu lassen; dadurch gekennzeichnet, dass die optischen Organe einen oszillierenden Schwingspiegel (4, 9, 11) umfassen, der auf der Flaschenoberfläche, parallel zur Längsachse der Flasche (6), eine strichförmige Aufschmelzfläche erzeugt.

7. Anordnung nach Anspruch 6, dadurch gekennzeichnet, dass der Schwingspiegel ein Planspiegel (11) ist, und dass in dem optischen Weg zum Schwingspiegel (11) eine bikonvexe sphärische Linse (10) angebracht ist, die das Laserbündel (1) über den Schwingspiegel (11) auf die Flaschenoberfläche fokussiert.

8. Anordnung nach Anspruch 6, dadurch gekennzeichnet, dass der Schwingspiegel (4) eine konkave sphärische Spiegeloberfläche besitzt, die das Laserbündel (1) auf die Flaschenoberfläche fokussiert.

9. Anordnung nach Anspruch 6, dadurch gekennzeichnet, dass der Schwingspiegel (9) eine konkave asphärische Spiegeloberfläche besitzt.

10. Anordnung zur Ausheilung von mechanischen und/oder chemischen Schädigungen der Oberfläche von gläsernen Mehrwegflaschen (6) umfassend: eine Laserquelle, optische Organe zum Richten des von der Laserquelle erzeugten Laserbündels (1) auf die Oberfläche einer zu behandelnden Flasche (6), Mittel (8) um die Flasche (6) auf eine Temperatur im Bereich des Transformationspunktes des Glases zu bringen, und Mittel (7) um die Flasche (6) um ihre Längsachse rotieren zu lassen; dadurch gekennzeichnet, dass die optischen Organe einen rotierenden Polygonspiegel (12) umfassen, der auf der Flaschenoberfläche parallel zur Längsachse der Flasche (6) eine strichförmige Aufschmelzfläche erzeugt.

11. Anordnung nach Anspruch 10, dadurch gekennzeichnet, dass die Spiegeloberflächen (12b) des Polygonspiegels (12) planar sind und dass in den optischen Weg zum Polygonspiegel (12) eine bikonvexe sphärische Linse (10) aufgenommen ist, die das Laserbündel (1) über den Polygonspiegel (12) auf die Flaschenoberfläche fokussiert.

12. Anordnung nach Anspruch 10, dadurch gekennzeichnet, dass der Polygonspiegel (12) konvexe asphärische Spiegeloberflächen (12a) besitzt.

13. Anordnung zur Ausheilung von mechanischen und/oder chemischen Schädigungen der Oberfläche von gläsernen Mehrwegflaschen (6), umfassend: eine Laserquelle, optische Organe zum Richten des von der Laserquelle erzeugten Laserbündels (1) auf die Oberfläche einer zu behandelnden Flasche (6) Mittel (8) um die Flasche (6) auf eine Temperatur im Bereich des Transformationspunktes des Glases zu bringen, und Mittel (7) um die Flasche (6) um ihre Längsachse rotieren zu lassen; dadurch gekennzeichnet, dass die optischen Organe eine zylinderförmige Linse (14) umfassen um das Laserbündel (1) strichförmig und parallel zur Längsachse der Flasche (6) auf die Flaschenoberfläche zu fokussieren.

14. Anordnung nach Anspruch 13, dadurch gekennzeichnet, dass die optischen Organe einen im Vergleich mit der Höhe einer auszuheilenden Schädigung kürzeren Strichfokus auf der Flaschenoberfläche bilden, und dass ein schrittweise verschiebbarer Spiegel zum Richten des Laserbündels auf aufeinander folgende Bereiche der Flaschenoberfläche vorgesehen ist.

15. Anordnung zur Ausheilung von mechanischen und/oder chemischen Schädigungen der Oberfläche von gläsernen Mehrwegflaschen (6),

umfassend: eine Laserquelle, optische Organe zum Richten des von der Laserquelle erzeugten Laserbündels (1) auf die Oberfläche einer zu behandelnden Flasche (6), Mittel (8) um die Flasche (6) auf eine Temperatur im Bereich des Transformationspunktes des Glases zu bringen, und Mittel (7) um die Flasche (6) um ihre Längsachse rotieren zu lassen; dadurch gekennzeichnet, dass die optischen Organe eine bikonvexe sphärische Linse umfassen und dass in dem optischen Weg zwischen dieser Linse und der Flaschenoberfläche ein bewegbarer Spiegel angeordnet ist, über den die Flaschenoberfläche spiralförmig abgetastet wird.

16. Anordnung zur Ausheilung von mechanischen und/oder chemischen Schädigungen der Oberfläche von gläsernen Mehrwegflaschen (6), umfassend: eine Laserquelle, optische Organe zum Richten des von der Laserquelle erzeugten Laserbündels (1) auf die Oberfläche einer zu behandelnden Flasche (6), Mittel (8) um die Flasche (6) auf eine Temperatur im Bereich des Transformationspunktes des Glases zu bringen, und Mittel (7) um die Flasche (6) um ihre Längsachse rotieren zu lassen; dadurch gekennzeichnet, dass optische Organe V = (15, 15', 22, 23, 18, 19) zur Teilung des Laserbündels (1) in Teilbündel (16, 17) und zum Richten dieser Teilbündel (16, 17) auf zuvor bestimmte Bereiche der Flaschenoberfläche vorgesehen sind.

17. Anordnung nach Anspruch 13, dadurch gekennzeichnet, dass optische Organe V = (15, 15', 22, 23, 18, 19) zur Teilung des Laserbündels (1) in Teilbündel (16, 17) und zum Richten dieser Teilbündel (16, 17) auf zuvor bestimmte Bereiche der Flaschenoberfläche vorgesehen sind.

18. Verfahren nach mindestens einem der Ansprüche 1 bis 5, dadurch gekennzeichnet, dass mehrere Flaschen (6) gleichzeitig behandelt werden.

## Claims

1. Process for the healing of mechanical and/or chemical points of damage on the surface of glass returnable bottles, a bottle (6) to be healed being brought to a temperature in the range of the transformation point of the glass of the bottle (6), the surface of the bottle (6) being treated thermally by laser beams (1), the healing taking place by the bottle surface being scanned in the form of lines by the laser beams (1), while the bottle (6) rotates about its longitudinal axis; characterized in that the bottle surface is treated, if appropriate partially, along lines running substantially parallel to the longitudinal axis of the bottle along the bottle surface.

2. Process according to Claim 1, characterized in that the bottle (6) is brought to a temperature of 500 - 600°C and in that the laser beams (1) are generated by a $CO_2$ laser.

3. Process according to Claim 1 or 2, characterized in that, before the thermal treatment, a glass similar to the bottle glass is applied to a defect of the bottle surface and is fused on in the thermal treatment.

4. Process according to at least one of Claims 1 to 3, characterized in that, during or after the thermal treatment, a titanium dioxide layer or tin oxide layer is applied to the bottle surface.

5. Process according to at least one of Claims 1 to 4, characterized in that, before the treatment with laser beams (1), the glass surface is mechanically roughened.

6. Arrangement for the healing of mechanical and/or chemical points of damage on the surface of glass returnable bottles (6), comprising: a laser source, optical elements for directing the laser beam (1) generated by the laser source onto the surface of a bottle (6) to be treated, means (8) to bring the bottle (6) to a temperature in the range of the transformation point of the glass, and means (7) to cause the bottle (6) to rotate about its longitudinal axis; characterized in that the optical elements comprise an oscillating mirror (4, 9, 11), which produces a fusion surface in the form of lines on the bottle surface, parallel to the longitudinal axis of the bottle (6).

7. Arrangement according to Claim 6, characterized in that the oscillating mirror is a plane mirror (11), and in that a biconvex spherical lens (10), which focuses the laser beam (1) onto the bottle surface via the oscillating mirror (11), is fitted in the optical path to the oscillating mirror (11).

8. Arrangement according to Claim 6, characterized in that the oscillating mirror (4) has a concave spherical mirror surface, which focuses the laser beam (1) onto the bottle surface.

9. Arrangement according to Claim 6, characterized in that the oscillating mirror (9) has a concave aspherical mirror surface.

10. Arrangement for the healing of mechanical and/or chemical points of damage on the surface of glass returnable bottles (6) comprising: a laser source, optical elements for directing the laser beam (1) generated by the laser source onto the surface of a bottle (6) to be treated, means (8) to bring the bottle (6) to a temperature in the range of the transformation point of the glass, and means (7) to cause the bottle (6) to rotate about its longitudinal axis; characterized in that the optical elements comprise a rotating polygonal mirror (12), which produces a fusion surface in the form of lines on the bottle surface, parallel to the longitudinal axis of the bottle (6).

11. Arrangement according to Claim 10, characterized in that the mirror surfaces (12b) of the polygonal mirror (12) are planar and in that a biconvex spherical lens (10), which focuses the laser beam (1) onto the bottle surface via the polygonal mirror (12), is accommodated in the optical path to the polygonal mirror.

12. Arrangement according to Claim 10, characterized in that the polygonal mirror (12) has convex aspherical mirror surfaces (12a).

13. Arrangement for the healing of mechanical and/or chemical points of damage on the surfaces of glass returnable bottles (6), comprising: a laser source, optical elements for directing the laser beam (1) generated by the laser source onto the surface of a bottle (6) to be treated, means (8) to bring the bottle (6) to a temperature in the range of the transformation point of the glass, and means (7) to cause the bottle (6) to rotate about its longitudinal axis; characterized in that the optical elements comprise a cylindrical lens (14) to focus the laser beam (1) onto the bottle surface in the form of lines and parallel to the longitudinal axis of the bottle (6).

14. Arrangement according to Claim 13, characterized in that the optical elements form on the bottle surface a shorter line focus in comparison with the height of a point of damage to be healed, and in that a stepwise-displaceable mirror is provided for directing the laser bundle onto successive regions of the bottle surface.

15. Arrangement for the healing of mechanical and/or chemical points of damage on the surface of glass returnable bottles (6), comprising: a laser source, optical elements for directing the laser beam (1) generated by the laser source onto the surface of a bottle (6) to be treated, means (8) to bring the bottle (6) to a temperature in the range of the transformation point of the glass, and means (7) to cause the bottle (6) to rotate about its longitudinal axis; characterized in that the optical elements comprise a biconvex spherical lens and in that a movable mirror, via which the bottle surface is scanned in the form of a spiral, is arranged in the optical path between this lens and the bottle surface.

16. Arrangement for the healing of mechanical and/or chemical points of damage on the surface of glass returnable bottles (6) comprising: a laser source, optical elements for directing the laser beam (1) generated by the laser source onto the surface of a bottle (6) to be treated, means (8) to bring the bottle (6) to a temperature in the range of the transformation point of the glass, and means (7) to cause the bottle (6) to rotate about its longitudinal axis; characterized in that optical elements V = (15, 15', 22, 23, 18, 19) for dividing the laser beam (1) into part beams (16, 17) and for directing these part beams (16, 17) onto predetermined regions of the bottle surface are provided.

17. Arrangement according to Claim 13, characterized in that optical elements V = (15, 15', 22, 23, 18, 19) for dividing the laser beam (1) into part-beams (16, 17) and for directing these part-beams (16, 17) onto predetermined regions of the bottle surface are provided.

18. Process according to at least one of Claims 1 to 5, characterized in that a plurality of bottles (6) treated simultaneously.

**Revendications**

1. Procédé de réparation de détériorations mécaniques et/ou chimiques de la surface de bouteilles récupérables en verre, dans lequel une bouteille à réparer (6) est portée à une température située dans la région du point de transformation du verre de la bouteille (6), la surface de la bouteille (6) est traitée thermiquement au moyen de rayons laser (1), la réparation s'effectue par le fait que la surface de la bouteille est balayée par bandes au moyen des rayons laser (1) pendant que la bouteille (6) tourne autour de son axe longitudinal, caractérisé en ce que la surface de la bouteille est traitée, éventuellement partiellement, sensiblement parallèlement à l'axe longitudinal de la bouteille, le long de bandes qui s'étendent le long de la surface de la bouteille.

2. Procédé selon la revendication 1, caractérisé en ce que la bouteille (6) est portée à une température de 500 - 600°C et en ce que les rayons laser (1) sont produits à l'aide d'un laser à $CO_2$.

3. Procédé selon la revendication 1 ou 2, caractérisé en ce qu'avant le traitement thermique, un verre analogue au verre de la bouteille est déposé sur un endroit défectueux de la surface de la bouteille et fondu au moment du traitement thermique.

4. Procédé selon au moins une des revendications 1 à 3, caractérisé en ce qu'une couche de bioxyde de titane ou d'oxyde de zing est déposée sur la surface de la bouteille pendant ou après le traitement thermique.

5. Procédé selon au moins une des revendications 1 à 4, caractérisé en ce que la surface de la bouteille est dépolie mécaniquement avant son irradiation par les rayons laser (1).

6. Dispositif de réparation de détériorations mécaniques et/ou chimiques de la surface de bouteilles récupérables en verre (6), comprenant une source laser, des organes optiques pour diriger le faisceau laser (1) produit par la source laser sur la surface d'une bouteille (6) à traiter, des moyens (8) servant à porter la bouteille (6) à une température de la région du point de transformation du verre, et des moyens (7) pour faire tourner la bouteille (6) autour de son axe longitudinal, caractérisé en ce que les organes optiques comprennent un miroir oscillant (4, 9, 11) qui produit sur la surface de la bouteille, parallèlement à l'axe longitudinal de la bouteille (6), une surface de fusion en forme de bande.

7. Dispositif selon la revendication 6, caractérisé en ce que le miroir oscillant est un miroir plan (11) et en ce que, sur le trajet optique aboutissant au miroir oscillant (11), est intercalée une lentille sphérique biconvexe (10), qui concentre le faisceau laser (1) sur la surface de la bouteille par l'intermédiaire du miroir oscillant (11).

8. Dispositif selon la revendication 6, caractérisé en ce que le miroir oscillant (4) possède une surface réfléchissante sphérique concave qui concentre le faisceau laser (1) sur la surface de la bouteille.

9. Dispositif selon la revendication 6, caractérisé en ce que le miroir oscillant (9) possède une surface réfléchissante asphérique concave.

10. Dispositif de réparation de détériorations mécaniques et/ou chimiques de la surface de bouteilles récupérables en verre (6) comprenant: une source laser, des organes optiques pour diriger le faisceau laser (1) produit par la source laser sur la surface d'une bouteille (6) à traiter, des moyens (9) pour porter la bouteille (6) à une température de la région du point de transformation du verre, et des moyens (7) pour faire tourner la bouteille (6) autour de son axe longitudinal, caractérisé en ce que les organes optiques comprennent un miroir polygonal tournant (12) qui produit sur la surface de la bouteille, parallèlement à l'axe longitudinal de la bouteille (6), une surface de fusion en forme de bande.

11. Dispositif selon la revendication 10, caractérisé en ce que les surfaces réfléchissantes (12b) du miroir polygonal (12) sont planes et en ce que, sur le trajet optique aboutissant au miroir polygonal (12), est intercalée une lentille sphérique biconvexe (10) qui concentre le faisceau laser (1) sur la surface de la bouteille en passant sur le miroir polygonal (12).

12. Dispositif selon la revendication 10, caractérisé en ce que le miroir polygonal (12) possède des surfaces réfléchissantes asphériques (12a).

13. Dispositif de réparation des détériorations mécaniques et/ou chimiques de la surface de bouteilles récupérables en verre (6), comprenant: une source laser, des organes optiques pour diriger le faisceau laser (1) produit par la source laser sur la surface d'une bouteille (6) à traiter, des moyens (8) pour porter la bouteille (6) à une température de la région du point de transformation du verre, et des moyens (7) pour faire tourner la bouteille (6) autour de son axe longitudinal, caractérisé en ce que les organes optiques comprennent une lentille cylindrique (14) destinée à concentrer le faisceau laser (1) en forme de bande et parallèlement à l'axe longitudinal de la bouteille (6) sur la surface de la bouteille.

14. Dispositif selon la revendication 13, caractérisé en ce que les organes optiques forment sur la surface de la bouteille un foyer en forme de bande qui est court comparativement à la hauteur d'une détérioration à réparer, et en ce qu'il est prévu un miroir pouvant se déplacer par pas successifs pour diriger le faisceau laser sur des régions de la surface de la bouteille qui se succèdent mutuellement.

15. Dispositif de réparation de détériorations mécaniques et/ou chimiques de la surface de bouteilles récupérables en verre (6), comprenant: une source laser, des organes optiques pour diriger le faisceau laser (1) produit par la source laser sur la surface d'une bouteille (6) à traiter, des moyens (8) pour porter la bouteille (6) à une température de la région du point de transformation du verre, et des moyens (7) pour faire tourner la bouteille (6) autour de son axe longitudinal, caractérisé en ce que les organes optiques comprennent une lentille sphérique biconvexe et en ce que, sur le trajet optique compris entre cette lentille et la surface de la bouteille, est disposé un miroir mobile par l'intermédiaire duquel la surface de la bouteille est balayée en spirale.

16. Dispositif de réparation de détérioratioons mécaniques et/ou chimiques de la surface de bouteilles récupérables en verre (6), comprenant: une source laser, des organes optiques pour diriger le faisceau laser (1) produit par la source laser sur la surface d'une bouteille (6) à traiter, des moyens (8) pour porter la bouteille (6) à une température de la région du point de transformation du verre, et des moyens (7) pour faire tourner la bouteille (6) autour de son axe longitudinal, caractérisé en ce qu'il est prévu des organes optiques V = (15, 15', 22, 23, 18, 19) pour diviser le faisceau laser (1) en faisceaux partiels (16, 17) et diriger ces faisceaux partiels (16, 17) sur des régions prédéterminées de la surfaces de la bouteille.

17. Dispositif selon la revendication 13, caractérisé en ce qu'il est prévu des organes optiques V = (15, 15', 22, 23, 18, 19) pour diviser le faisceau laser (1) en faisceaux partiels (16, 17) et à diriger ces faisceaux partiels (16, 17) sur des régions prédéterminées de la surface de la bouteille.

18. Procédé selon au moins une des revendications 1 à 5, caractérisé en ce que plusieurs bouteilles (6) sont traitées simultanément.

# FIG.1

# FIG.2

# FIG.3

a

b

# FIG.4

a

b